(19) Europäisches Patentamt / European Patent Office / Office européen des brevets

(11) **EP 3 827 500 B1**

(12) **FASCICULE DE BREVET EUROPEEN**

(45) Date de publication et mention
de la délivrance du brevet:
**03.01.2024 Bulletin 2024/01**

(21) Numéro de dépôt: **19733521.9**

(22) Date de dépôt: **01.07.2019**

(51) Classification Internationale des Brevets (IPC):
*H02K 29/03* (2006.01)     *H02K 1/276* (2022.01)
*H02K 21/02* (2006.01)

(52) Classification Coopérative des Brevets (CPC):
**H02K 1/276; H02K 21/028; H02K 29/03;**
H02K 2213/03

(86) Numéro de dépôt international:
**PCT/EP2019/067558**

(87) Numéro de publication internationale:
**WO 2020/020580 (30.01.2020 Gazette 2020/05)**

(54) **POLES ASYMETRIQUES D'UN ROTOR DE MACHINE ELECTRIQUE**

ASYMMETRISCHE POLE EINES ROTOR EINER ELEKTRISCHEN MASCHINE

ASYMMETRIC POLES OF A ROTOR OF AN ELECTRICAL MACHINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.07.2018 FR 1856866
28.03.2019 FR 1903274**

(43) Date de publication de la demande:
**02.06.2021 Bulletin 2021/22**

(73) Titulaire: **IFP Energies nouvelles
92852 Rueil-Malmaison (FR)**

(72) Inventeurs:
• **VALIN, Thomas
92852 RUEIL-MALMAISON CEDEX (FR)**
• **GAUSSENS, Benjamin
92852 RUEIL-MALMAISON CEDEX (FR)**
• **CHAREYRON, Baptiste
92852 RUEIL-MALMAISON CEDEX (FR)**
• **ABDELLI, Abdenour
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
EP-A1- 3 273 573     WO-A1-2016/198468
CN-B- 105 914 925     US-A1- 2017 201 136

**Description**

**Domaine technique**

La présente invention se rapporte à une machine électrique tournante synchro-réluctante (assistée d'aimants permanents), et concerne plus particulièrement un rotor d'une telle machine qui fonctionne avec un bus continu faible tension et qui permet une vitesse de rotation élevée.
Généralement, une telle machine électrique comporte un stator et un rotor disposés coaxialement l'un dans l'autre.
Le rotor est formé d'un corps de rotor avec un empilage de tôles placé sur un arbre de rotor. Ces tôles comprennent des logements pour des aimants permanents et des perforations pour créer des barrières de flux permettant de diriger radialement le flux magnétique des aimants vers le stator et pour favoriser la création d'un couple reluctant.
Ce rotor est généralement logé à l'intérieur d'un stator qui porte des bobinages électriques permettant de générer un champ magnétique permettant d'entraîner en rotation le rotor.

**Technique antérieure**

Comme cela est mieux décrit dans la demande de brevet WO2016188764, le rotor comprend une pluralité d'évidements axiaux qui traversent les tôles de part en part.
Une première série d'évidements axiaux, disposés radialement les uns au-dessus des autres et à distance les uns des autres, forment des logements pour des générateurs de flux magnétiques, ici des aimants permanents sous forme de barreau rectangulaire.
L'autre série d'évidements consiste en des perforations de direction radiale inclinée, qui partent de ces logements pour arriver au voisinage du bord des tôles, au voisinage de l'entrefer.
Les perforations inclinées sont disposées symétriquement par rapport aux logements des aimants de manière à former à chaque fois une figure géométrique sensiblement en forme de V à fond aplati avec le fond plat formé par le logement des aimants et avec les bras inclinés de ce V formés par les perforations. Il se crée ainsi des barrières de flux formées par les perforations. Le flux magnétique provenant des aimants ne peut alors que transiter par les parties pleines entre les perforations. Ces parties pleines sont constituées d'un matériau ferromagnétique.
Cependant, il a été constaté que les harmoniques de force contre-électromotrice et l'ondulation du couple sont importantes dans ce type de machine synchrone à réluctance assistée d'aimants permanents.
Ceci peut générer des à-coups et des vibrations au niveau du rotor en entraînant un inconfort d'utilisation de cette machine. La présente invention vise à remédier aux inconvénients énumérés ci-dessus, et notamment à réduire l'ondulation du couple, les harmoniques de force contre-électromotrice et le bruit acoustique, tout en maximisant la production de couple.
D'autres machines électriques sont décrites dans les demandes de brevet WO 2016/198468, EP 3273572, US 2017/201136, CN 105914925.

**Résumé de l'invention**

La présente invention concerne un rotor pour machine électrique, le rotor comprend :

- un corps de rotor, formé par un empilage de tôles, de préférence placé sur un arbre de rotor et
- N paires de pôles magnétiques, chaque pôle magnétique est composé d'au moins trois aimants positionnés dans des évidements axiaux et
- trois barrières de flux asymétriques qui composent chaque pôle magnétique dont une barrière de flux externe, une barrière de flux centrale et une barrière de flux interne, chaque barrière de flux comprend deux évidements inclinés positionnés de part et d'autre de chaque évidement axial, les deux évidements inclinés forment entre eux un angle d'ouverture qui correspond à l'angle entre deux droites passant chacune par le centre C du rotor et par un point milieu positionné au niveau d'une face externe des évidements respectifs de chaque barrière de flux.

Ledit rotor comprend

- N pôles magnétiques primaires composés chacun d'une barrière de flux interne comprenant un angle d'ouverture (θ1), d'une barrière de flux centrale comprenant un angle d'ouverture (θ2), et une barrière de flux externe comprenant un angle d'ouverture (θ3), de telle sorte que les angles d'ouverture (θ1, θ2, θ3) vérifient au moins deux des trois équations suivantes : $\theta1=(0.905+/-0.027)\times P$, $\theta2=(0.683+/-0.027)\times P$, $\theta3=(0.416+/- 0.027)\times P$,

- N pôles magnétiques secondaires composés chacun d'une barrière de flux interne comprenant un angle d'ouverture ($\theta1$), d'une barrière de flux centrale comprenant un angle d'ouverture ($\theta2$), et une barrière de flux externe comprenant un angle d'ouverture ($\theta3$), de telle sorte que les angles d'ouverture ($\theta1$, $\theta2$, $\theta3$) vérifient au moins deux des trois équations suivantes : $\theta1=(0.819+/-0.027)\times P$, $\theta2=(0.601+/-0.027)\times P$, $\theta3=(0.373+/- 0.027)\times P$, chaque pôle secondaire étant alterné avec un pôle primaire et avec

$$P = \frac{360}{2 \times N}.$$

- P étant le pas polaire dudit rotor défini en degrés par

Selon un mode de réalisation de l'invention, ledit nombre N de paires de pôles magnétiques est compris entre 2 et 9, de préférence entre 3 et 6, et vaut de manière préférée 4.

Conformément à une mise en oeuvre de l'invention, lesdites barrières de flux ont sensiblement une forme de V à fond aplati.

Selon un aspect, lesdits angles d'ouverture ($\theta1$, $\theta2$, $\theta3$) desdits pôles magnétiques primaires vérifient au moins deux des trois équations suivantes : $\theta1=(0.905+/-0.02)\times P$, $\theta2=(0.683+/-0.02)\times P$, $\theta3=(0.416+/-0.02)\times P$.

Selon un aspect, lesdits angles d'ouverture ($\theta1$, $\theta2$, $\theta3$) desdits pôles magnétiques secondaires vérifient au moins deux des trois équations suivantes : $\theta1=(0.819+/-0.02)\times P$, $\theta2=(0.601+/-0.02)\times P$, $\theta3=(0.373+/-0.02)\times P$.

Selon un aspect, lesdits angles d'ouverture ($\theta1$, $\theta2$, $\theta3$) desdits pôles magnétiques primaires vérifient les trois équations.

Selon un aspect, lesdits angles d'ouverture ($\theta1$, $\theta2$, $\theta3$) desdits pôles magnétiques secondaires vérifient les trois équations.

En outre, l'invention concerne une machine électrique comprenant un stator et un rotor selon l'une des caractéristiques précédentes, ledit rotor étant logé à l'intérieur dudit stator.

Selon un mode de réalisation, ledit stator comprend une multiplicité d'encoches radiales disposées circonférentiellement le long dudit stator.

Avantageusement, les encoches s'étendent axialement le long du stator.

Selon un aspect, le stator a un diamètre extérieur compris entre 100 et 300 mm et est de préférence égal à 140 mm et un diamètre intérieur compris entre 50 et 200 mm et est de préférence égal à 95 mm.

Conformément à une caractéristique, elle comprend un entrefer dont la longueur est comprise entre 0.4 mm et 0.8 mm et est de préférence égale à 0.5 mm.

De manière avantageuse, ladite machine électrique est du type machine électrique synchro-réluctante.

**Liste des figures**

D'autres caractéristiques et avantages de l'invention, apparaîtront à la lecture de la description ci-après d'exemples non limitatifs de réalisation, en se référant aux figures annexées et décrites ci-après.

[Fig 1]

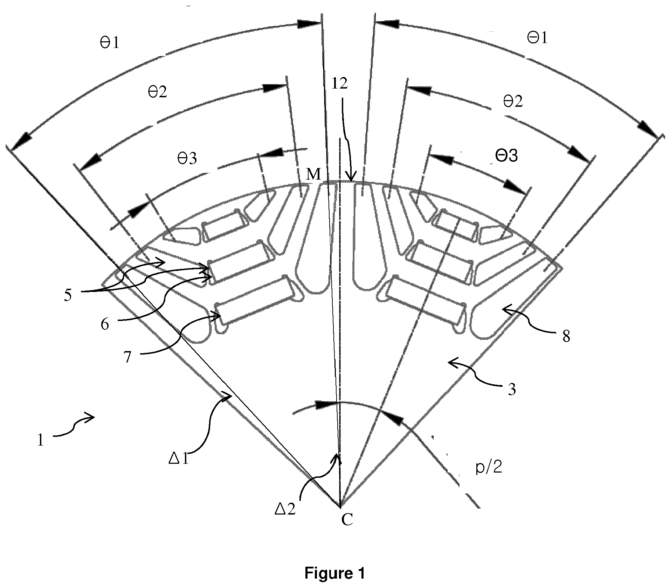

La figure 1 illustre un rotor conforme à un mode de réalisation de l'invention, le rotor comportant quatre paires de pôles.
[Fig 2]

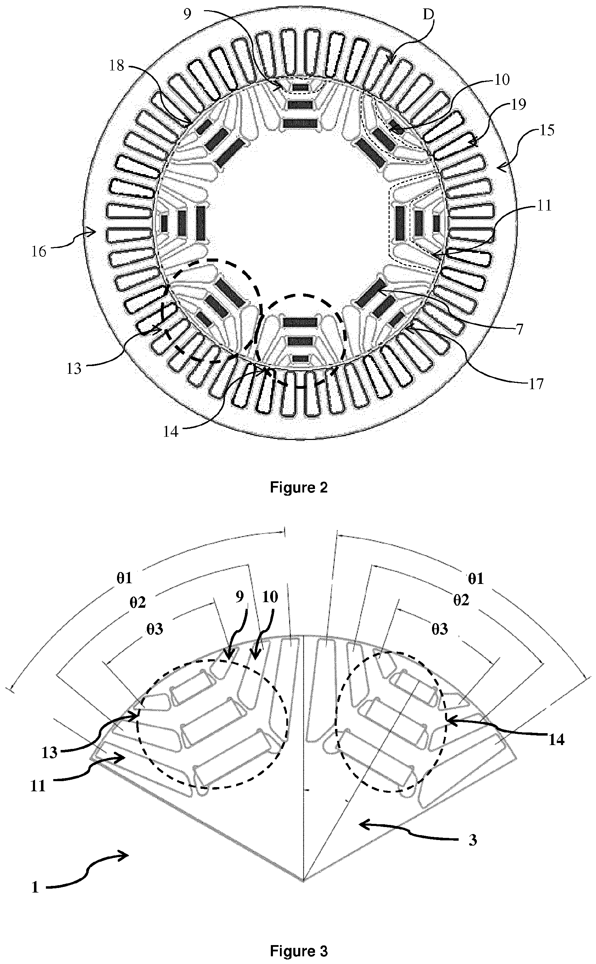

La figure 2 illustre une machine électrique possédant quatre paires de selon un mode de réalisation de l'invention.
[Fig 3]
La figure 3 illustre une machine électrique possédant trois paires de pôles selon un mode de réalisation de l'invention.
[Fig 4]

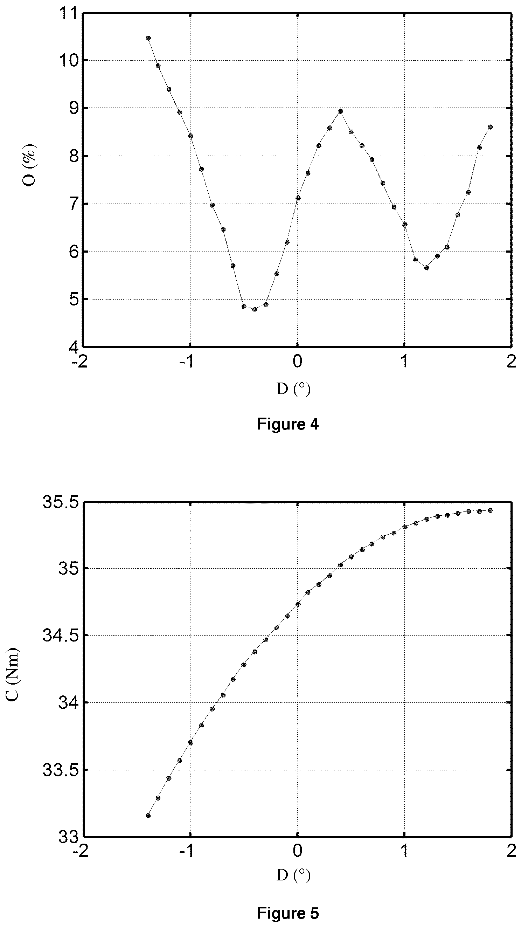

La figure 4 est une courbe représentant les ondulations de couple en fonction du déphasage.
[Fig 5]
La figure 5 est une courbe représentant le couple en fonction du déphasage.

**Description des modes de réalisation**

La présente invention concerne un rotor pour une machine électrique, notamment une machine électrique du type synchro-réluctante. En outre, la présente invention concerne une machine électrique comprenant un rotor selon l'invention et un stator, le rotor étant disposé au sein du stator coaxialement à celui-ci.

Comme illustré sur la figure 1 (de manière non limitative), un rotor 1 comporte de manière connue en soi, un arbre (non représenté), de préférence magnétique, sur lequel est monté un empilage de tôles 3. Dans le cadre de l'invention, ces tôles 3 sont ferromagnétiques planes, identiques, laminées et de forme circulaire et sont assemblées les unes aux autres par tous moyens connus. Les tôles 3 peuvent comprendre un alésage central (non représenté) traversé par l'arbre de rotor et une pluralité d'évidements axiaux 5 qui traversent les tôles 3 de part en part.

Une première série d'évidements axiaux 6, disposés radialement les uns au-dessus des autres et à distance les uns des autres, forment des logements pour des générateurs de flux magnétiques, ici des aimants permanents 7 sous forme de barreau. Les évidements axiaux 6 forment sensiblement des trapèzes. Cependant les évidements axiaux 6 peuvent prendre d'autres formes, notamment des formes rectangulaires, carrées, etc.

Une deuxième série d'évidements consiste en des perforations de direction inclinée 8 par rapport à la direction radiale, qui partent des évidements axiaux 6 pour arriver au voisinage du bord des tôles 3, c'est-à-dire au niveau d'un entrefer de la machine électrique.

Les perforations inclinées 8 sont disposées symétriquement par rapport aux évidements 6 des aimants 7 de manière à former à chaque fois une figure géométrique sensiblement en forme de V à fond aplati, avec le fond plat formé par le logement 6 des aimants 7 et avec les bras inclinés de ce V formés par les perforations inclinées 8. Les perforations inclinées 8 forment des barrières de flux. Le flux magnétique provenant des aimants 7 ne peut alors que transiter par les parties pleines des tôles 3 entre les évidements. Ces parties pleines sont constituées d'un matériau ferromagnétique.

Selon l'invention, le rotor comprend N paires de pôles magnétiques (ou 2xN pôles magnétiques), un pôle magnétique étant formé des trois évidements 6 pour les aimants sur une même direction radiale, et les barrières de flux (9, 10, 11) associées. Avantageusement, N peut être compris entre 2 et 9, et de préférence N est compris entre 3 et 6, et vaut de manière préférée 4.

A partir du nombre N de paires de pôles, on définit un pas polaire P. Exprimé en degré, le pas polaire peut être

$$P = \frac{360}{2 \times N}$$

déterminé par une formule du type : .

Pour l'exemple illustré des figures 1 et 2, le rotor 1 comprend huit pôles magnétiques (N = 4), le pas polaire P vaut donc 45°. Chaque pôle magnétique est composé de trois aimants permanents 7 positionnés dans les trois évidements axiaux 6 prévus pour loger les aimants permanents 7. Le rotor 1 est également composé de trois barrières de flux, dont une barrière de flux externe 9 (associée à l'évidement 6 externe, c'est-à-dire le plus proche de la périphérie du rotor 1), une barrière de flux centrale 10 (associée à l'évidement 6 central) et une barrière de flux interne 11 (associée à l'évidement 6 interne, c'est-à-dire le plus proche du centre du rotor 1).

Tel que cela est visible sur les figures 1 et 2, chaque barrière de flux (9, 10, 11) comprend deux perforations inclinées qui sont disposées symétriquement par rapport aux logements des aimants 7 pour chaque pôle magnétique. Ainsi, il se forme à chaque fois une figure géométrique sensiblement en forme de V à fond aplati avec le fond plat formé par le logement 7 et avec les bras inclinés de ce V formés par les perforations inclinées. Pour chaque barrière de flux (9, 10, 11) de chaque pôle magnétique va correspondre un angle d'ouverture ($\theta1$, $\theta2$, $\theta3$) qui va qualifier l'ouverture de la forme en V. Ces angles d'ouverture correspondent à l'angle entre deux droites ($\Delta1$, $\Delta2$) passant chacune par le centre C du rotor 1 et par un point milieu M positionné au niveau d'une face externe 12 des perforations de direction radiale inclinée 8 de chaque barrière de flux. Cette face externe 12 se situe à la périphérie du rotor 1, au niveau d'un entrefer mécanique de la machine électrique comme cela sera vu par dans suite de la description.

Dans le cadre de l'invention, le rotor 1 comprend deux architectures distinctes de pôles magnétiques. A cet effet, il comprend N pôles magnétiques primaires 13 et N pôles magnétiques secondaires 14. Le rotor comporte une alternance de pôles magnétiques primaires 13 et de pôles magnétiques secondaires 14. Pour les exemples des figures 1 et 2, le rotor 1 comporte quatre pôles magnétiques primaires 13 et quatre pôles magnétiques secondaires 14.

Selon l'invention, les N pôles magnétiques primaires 13 sont composés chacun d'une barrière de flux interne 11 qui comprend un angle d'ouverture $\theta1$, d'une barrière de flux centrale 10 comprenant un angle d'ouverture $\theta2$ et une barrière de flux externe 9 comprenant un angle d'ouverture $\theta3$. Les angles d'ouverture $\theta1$, $\theta2$ et $\theta3$ des pôles magnétiques primaires vérifient au moins deux des trois équations suivantes : $\theta1=(0.905+/0.027)\times P$, $\theta2=(0.683+/0.027)\times P$, $\theta3=(0.416+/0.027)\times P$, Les N pôles magnétiques secondaires 14 sont composés quant à eux chacun d'une barrière de flux interne 11 comprenant un angle d'ouverture $\theta1$, d'une barrière de flux centrale 10 comprenant un angle d'ouverture $\theta2$ et une barrière de flux externe 9 comprenant un angle d'ouverture $\theta3$. Les angles d'ouverture $\theta1$, $\theta2$ et $\theta3$ des pôles magnétiques primaires vérifient au moins deux des trois équations suivantes : $\theta1=(0.819+/0.027)\times P$, $\theta2=(0.601+/0.027)\times P$, $\theta3=(0.373+/0.027)\times P$.

Dans la présente demande X +/- Y (avec X et Y des nombres positifs), signifie un intervalle centré sur la valeur X, l'intervalle étant compris entre les valeurs X-Y et X+Y.

On peut noter que si deux des trois angles d'ouverture d'un pôle sont contraints par les équations, le troisième est également contraint par construction du rotor : en particulier par le pas polaire (angle d'ouverture maximale), par les autres angles d'ouverture (notamment l'angle d'ouverture de la barrière interne est supérieur à l'angle d'ouverture centrale, lui-même supérieur à l'angle d'ouverture de la barrière externe), par la symétrie des barrières de flux au sein d'un pôle. Ainsi, contraindre deux angles sur trois par les équations est suffisant pour obtenir les effets désirés en termes de réduction des ondulations de couple et des harmoniques.

Un aspect majeur de l'invention est que le rotor 1 comprend une alternance entre les pôles magnétiques primaires 13 et les pôles magnétiques secondaires 14. De cette manière, l'ondulation du couple, les harmoniques de force contre-électromotrice et le bruit acoustique sont fortement réduits par rapport au machine électrique de l'art antérieur, tout en maximisant le couple.

En effet, il se crée ainsi des barrières de flux asymétriques entre deux pôles consécutifs. Le flux magnétique provenant des aimants ne peut alors que transiter par les parties pleines entre les perforations et permet de réduire l'ondulation du couple, les harmoniques de force contre-électromotrice et le bruit acoustique.

Selon une option de réalisation de l'invention, les angles d'ouverture θ1, θ2 et θ3 desdits pôles magnétiques primaires 13 vérifient au moins deux des trois équations suivantes : θ1=(0.905+/0.02)×P, θ2=(0.683+/0.02)×P, θ3=(0.416+/0.02)×P. Cette option de réalisation permet d'optimiser la réduction des ondulations de couple et la réduction des harmoniques.

Selon une autre option de réalisation de l'invention (pouvant être combinée à l'option précédente), les angles d'ouvertures θ1, θ2 et θ3 des pôles magnétiques secondaires 14 vérifient au moins deux des trois équations suivantes : θ1=(0.819+/0.027)×P, θ2=(0.601+/0.027)×P, θ3=(0.373+/0.027)×P. Cette option de réalisation permet d'optimiser la réduction des ondulations de couple et la réduction des harmoniques.

De préférence, les angles d'ouverture θ1, θ2 et θ3 des pôles magnétiques primaires 13 vérifient les trois équations énoncées ci-dessous (c'est-à-dire soit les équations selon l'invention, soit les équations selon une option de réalisation). Ce mode de réalisation permet d'optimiser la réduction des ondulations de couple et la réduction des harmoniques

De manière préférée, les angles d'ouverture θ1, θ2 et θ3 des pôles magnétiques secondaires 14 vérifient les trois équations (c'est-à-dire soit les équations selon l'invention, soit les équations selon une option de réalisation). Ce mode de réalisation permet d'optimiser la réduction des ondulations de couple et la réduction des harmoniques

Ainsi, conformément une mise en oeuvre préférée, les N pôles magnétiques primaires 13 sont composés chacun d'une barrière de flux interne 11 qui comprend un angle d'ouverture θ1 sensiblement égal à (0.905+/-0.02)×P, d'une barrière de flux centrale 10 comprenant un angle d'ouverture θ2 sensiblement égal à (0.683+/-0.02)×P et une barrière de flux externe 9 comprenant un angle d'ouverture θ3 sensiblement égal à (0.416+/-0.02)×P. Les N pôles magnétiques secondaires 14 sont composés quant à eux chacun d'une barrière de flux interne 11 comprenant un angle d'ouverture θ1 sensiblement égal à (0.819+/-0.02)×P, d'une barrière de flux centrale 10 comprenant un angle d'ouverture θ2 sensiblement égal à (0.601+/-0.02)×P et une barrière de flux externe 9 comprenant un angle d'ouverture θ3 sensiblement égal à (0.373+/-0.02)×P. Cette mise en oeuvre préférée permet une solution optimale en termes de réduction des ondulations de couple et de réduction des harmoniques.

Pour le mode de réalisation des figures 1 et 2 pour lequel N=4 donc P=45°, les quatre pôles magnétiques primaires 13 sont composés chacun d'une barrière de flux interne 11 qui comprend un angle d'ouverture θ1 sensiblement égal à 40.7°, d'une barrière de flux centrale 10 comprenant un angle d'ouverture θ2 sensiblement égal à 30.7° et une barrière de flux externe 9 comprenant un angle d'ouverture θ3 sensiblement égal à 18.7°. Les quatre pôles magnétiques secondaires 14 sont composés quant à eux chacun d'une barrière de flux interne 11 comprenant un angle d'ouverture θ1 sensiblement égal à 36.9°, d'une barrière de flux centrale 10 comprenant un angle d'ouverture θ2 sensiblement égal à 27.1° et une barrière de flux externe 9 comprenant un angle d'ouverture θ3 sensiblement égal à 16.8°.

La figure 3 illustre, schématiquement et de manière non limitative, une portion d'un rotor 1 avec trois paires de pôles (N=3, donc P=60°) selon un mode de réalisation de l'invention.

Pour le mode de réalisation de la figure 3 pour lequel N=3, les trois pôles magnétiques primaires 13 sont composés chacun d'une barrière de flux interne 11 qui comprend un angle d'ouverture θ1 sensiblement égal à 53.8°, d'une barrière de flux centrale 10 comprenant un angle d'ouverture θ2 sensiblement égal à 40.3° et une barrière de flux externe 9 comprenant un angle d'ouverture θ3 sensiblement égal à 24.8°. Les quatre pôles magnétiques secondaires 14 sont composés quant à eux chacun d'une barrière de flux interne 11 comprenant un angle d'ouverture θ1 sensiblement égal à 49.0°, d'une barrière de flux centrale 10 comprenant un angle d'ouverture θ2 sensiblement égal à 35.6° et une barrière de flux externe 9 comprenant un angle d'ouverture θ3 sensiblement égal à 22.5°. Pour ce mode de réalisation, les six angles d'ouverture (θ1, θ2 et θ3 des pôles magnétiques primaires et secondaire) appartiennent à la mise en oeuvre préférée de l'invention.

La réduction de l'ondulation de couple, des harmoniques de force contre-électromotrice et de bruit acoustique est en outre obtenue car la définition des angles des pôles magnétiques primaire et secondaire selon l'invention permet un angle de déphasage de +1..2° mécanique par rapport à une conception asymétrique de la machine électrique, et cette conception asymétrique peut par exemple (dans le cas d'une machine électrique à huit pôles) sensiblement correspondre à la conception décrite dans la demande de brevet portant le numéro de dépôt FR 17/58.621. Avec cet angle de déphasage noté D, on peut déterminer les angles $\theta i$ des barrières de flux la formule suivante : $\theta i = \theta iAA + 2D$ avec i = 1, 2 ou 3 correspondant aux barrières de flux interne, centrale et externe, $\theta iAA$ correspondant à l'angle initiale de la barrière de flux.

La figure 4 illustre la courbe de l'ondulation de couple O en % en fonction de l'angle D de déphasage en degré (°) pour un rotor de machine électrique avec N paires de pôles asymétriques, chacun des pôles comprenant trois aimants et trois barrières de flux. On remarque que cette courbe possède deux minima locaux, un premier aux alentours de -0.3° et un deuxième à +1.2°. Par conséquent, la configuration angulaire des barrières de flux permettant un angle de déphasage mécanique de +1.2° permet bien une réduction des ondulations de couple.

La figure 5 illustre la courbe du couple C en Nm en fonction de l'angle D de déphasage en degré (°) pour un rotor de machine électrique avec N paires de pôles asymétriques, chacun des pôles comprenant trois aimants et trois barrières de flux. On remarque que cette courbe est croissante en fonction de l'angle de déphasage D. Par conséquent, la configuration angulaire des barrières de flux permettant un angle de déphasage mécanique de +1.2° permet une production de couple plus élevée que pour un angle de déphasage de -0.3°, avec un gain de couple d'environ 0.8 Nm. Ainsi, un angle de déphasage mécanique de +1.2° permet un bon compromis entre réduction des ondulations de couple et couple produit.

Ainsi, le rotor selon l'invention est adapté à machine électrique synchro-réluctante qui fonctionne avec un bus continu faible tension qui permet une vitesse de rotation élevée (supérieure à 15 000 tr/min).

Le tableau 1 donne, de manière non limitative, les valeurs des angles $\theta 1$, $\theta 2$ et $\theta 3$ pour différentes valeurs de N selon l'invention.

[Table 1]

| N | | 3 | 4 | 5 | 6 |
|---|---|---|---|---|---|
| P | | 60° | 45° | 36° | 30° |
| Pole magnétique secondaire 14 | $\theta 3$ | 22,38°+/- 1.62° | 16,79°+/- 1.215° | 13,43°+/- 0.972° | 11,19°+/- 0.81° |
| | $\theta 2$ | 36,06°+/- 1.62° | 27,05°+/- 1.215° | 21,64°+/- 0.972° | 18,03°+/- 0.81° |
| | $\theta 1$ | 49,14°+/- 1.62° | 36,86°+/- 1.215° | 29,48°+/- 0.972° | 24,57°+/- 0.81° |
| Pôle magnétique primaire 13 | $\theta 3$ | 24,96°+/- 1.62° | 18,72°+/- 1.215° | 14,98°+/- 0.972° | 12,48°+/- 0.81° |
| | $\theta 2$ | 40,98°+/- 1.62° | 30,74°+/- 1.215° | 24,59°+/- 0.972° | 20,49°+/- 0.81° |
| | $\theta 1$ | 54,30°+/- 1.62° | 40,73°+/- 1.215° | 32,58°+/- 0.972° | 27,15°+/- 0.81° |

Le tableau 2 donne, de manière non limitative, les valeurs des angles $\theta 1$, $\theta 2$ et $\theta 3$ pour différentes valeurs de N selon la mise en oeuvre préférée de réalisation de l'invention.

[Table 2]

| N | | 3 | 4 | 5 | 6 |
|---|---|---|---|---|---|
| P | | 60° | 45° | 36° | 30° |
| Pole magnétique secondaire 14 | $\theta 3$ | 22,38°+/- 1.20° | 16,79°+/- 0.90° | 13,43°+/- 0.72° | 11,19°+/- 0.60° |
| | $\theta 2$ | 36,06°+/- 1.20° | 27,05°+/- 0.90° | 21,64°+/- 0.72° | 18,03°+/- 0.60° |
| | $\theta 1$ | 49,14°+/- 1.20° | 36,86°+/- 0.90° | 29,48°+/- 0.72° | 24,57°+/- 0.60° |
| Pôle magnétique primaire 13 | $\theta 3$ | 24,96°+/- 1.20° | 18,72°+/- 0.90° | 14,98°+/- 0.72° | 12,48°+/- 0.60° |
| | $\theta 2$ | 40,98°+/- 1.20° | 30,74°+/- 0.90° | 24,59°+/- 0.72° | 20,49°+/- 0.60° |
| | $\theta 1$ | 54,30°+/- 1.20° | 40,73°+/- 0.90° | 32,58°+/- 0.72° | 27,15°+/- 0.60° |

Selon une mise en oeuvre de l'invention, le rotor 1 peut avoir une longueur de 75 mm, et les tôles 3 constitutives du rotor 1 peuvent être laminées à 0.35 mm. Toutefois ces valeurs ne sont nullement limitatives et on peut avoir tous les spectres de distances qui satisfassent aux valeurs d'angles énoncées ci-dessus.

Comme visible sur la figure 2, qui illustre, schématiquement et de manière non limitative, une machine électrique tournante conforme à un mode de réalisation de l'invention (ici une machine synchrone à réluctance variable assistée d'aimant permanent), la machine électrique comprend également un stator 15 imbriqué dans le rotor 1 de manière coaxiale.

Le stator 15 comprend une bague annulaire 16 avec une paroi interne 17 dont le diamètre intérieur est prévu pour recevoir le rotor 1 avec un espace nécessaire pour réaliser un entrefer 18. Cette bague comprend une multiplicité d'encoches (perçages), ici de section oblongue, qui forment des encoches 19 pour les bobinages d'induit.

Plus précisément, ces perçages s'étendent axialement tout au long du stator 15 en étant disposés radialement sur la bague tout en étant placés circonférentiellement à distance les uns des autres d'une distance D. Le nombre d'encoches est prédéterminé en fonction des caractéristiques de la machine électrique, et en fonction du nombre N de paires de pôles. Pour l'exemple illustré de la figure 2, pour lequel N=4, il y a 48 encoches.

Selon un exemple de réalisation, le stator peut avoir un diamètre extérieur compris entre 100 et 300 mm, et de préférence environ 140 mm et un diamètre intérieur compris entre 50 et 200 mm, de préférence environ 95 mm. La longueur de l'entrefer 18 de la machine électrique peut être comprise entre 0.4 et 0.8 mm, de préférence entre 0.5 et 0.6 mm.

Comme il va de soi, l'invention ne se limite pas aux seules formes de réalisation des évidements, décrits ci-dessus à titre d'exemple, elle embrasse au contraire toutes les variantes de réalisation dans le cadre des revendications.

**Revendications**

1. Rotor (1) pour machine électrique, le rotor (1) comprend :

   - un corps de rotor, formé par un empilage de tôles (3), de préférence placé sur un arbre de rotor (2) et
   - N paires de pôles magnétiques, chaque pôle magnétique est composé d'au moins trois aimants (7) positionnés dans des évidements axiaux (6) et
   - trois barrières de flux asymétriques qui composent chaque pôle magnétique dont une barrière de flux externe (9), une barrière de flux centrale (10) et une barrière de flux interne (11), chaque barrière de flux (9, 10, 11) comprend deux évidements inclinés (8) positionnés de part et d'autre de chaque évidement axial (6), les deux évidements inclinés (8) forment entre eux un angle d'ouverture ($\theta$1, $\theta$2, $\theta$3) qui correspond à l'angle entre deux droites ($\Delta$1, $\Delta$2) passant chacune par le centre C du rotor (1) et par un point milieu (M) positionné au niveau d'une face externe (12) des évidements (8) respectifs de chaque barrière de flux (9, 10, 11), P étant le pas polaire dudit rotor (1) défini en degrés par $$P = \frac{360}{2 \times N}$$ ; **caractérisé en ce que** ledit rotor (1) comprend
   - N pôles magnétiques primaires (13) composés chacun d'une barrière de flux interne (11) comprenant un angle d'ouverture ($\theta$1), d'une barrière de flux centrale (10) comprenant un angle d'ouverture ($\theta$2), et une barrière de flux externe (9) comprenant un angle d'ouverture ($\theta$3), de telle sorte que les angles d'ouverture ($\theta$1, $\theta$2, $\theta$3) vérifient au moins deux des trois équations suivantes : $\theta$1=(0.905+/-0.027)xP, $\theta$2=(0.683+/- 0.027)$\times$P, $\theta$3=(0.416+/-0.027)$\times$P,
   - N pôles magnétiques secondaires (14) composés chacun d'une barrière de flux interne (11) comprenant un angle d'ouverture ($\theta$1), d'une barrière de flux centrale (10) comprenant un angle d'ouverture ($\theta$2) et une barrière de flux externe (9) comprenant un angle d'ouverture ($\theta$3), de telle sorte que les angles d'ouverture ($\theta$1, $\theta$2, $\theta$3) vérifient au moins deux des trois équations suivantes : $\theta$1=(0.819+/-0.027)$\times$P, $\theta$2=(0.601+/- 0.027)$\times$P, $\theta$3=(0.373+/-0.027)$\times$P, chaque pôle secondaire (14) étant alterné avec un pôle primaire (13).

2. Rotor (1) selon la revendication 1, dans lequel ledit nombre N de paires de pôles magnétiques est compris entre 2 et 9, de préférence entre 3 et 6, et vaut de manière préférée 4.

3. Rotor (1) selon l'une des revendications précédentes, dans lequel lesdites barrières de flux ont sensiblement une forme de V à fond aplati.

4. Rotor (1) selon l'une des revendications précédentes, dans lequel lesdits angles d'ouverture ($\theta$1, $\theta$2, $\theta$3) desdits pôles magnétiques primaires (13) vérifient au moins deux des trois équations suivantes : $\theta$1=(0.905+/-0.02)$\times$P, $\theta$2=(0.683+/-0.02)$\times$P, $\theta$3=(0.416+/- 0.02)$\times$P.

5. Rotor (1) selon l'une des revendications précédentes, dans lequel lesdits angles d'ouverture ($\theta$1, $\theta$2, $\theta$3) desdits pôles magnétiques secondaires (14) vérifient au moins deux des trois équations suivantes : $\theta$1=(0.819+/-0.02)$\times$P, $\theta$2=(0.601+/-0.02)$\times$P, $\theta$3=(0.373+/-0.02)$\times$P.

6. Rotor (1) selon la revendication 4, dans lequel lesdits angles d'ouverture ($\theta$1, $\theta$2, $\theta$3) desdits pôles magnétiques primaires (13) vérifient les trois équations.

7. Rotor (1) selon la revendication 5, dans lequel lesdits angles d'ouverture ($\theta$1, $\theta$2, $\theta$3) desdits pôles magnétiques secondaires (14) vérifient les trois équations.

8. Machine électrique **caractérisée en ce qu'**elle comprend un stator (15) et un rotor (1) selon l'une des revendications précédentes, ledit rotor (1) étant logé à l'intérieur dudit stator (15).

9. Machine électrique selon la revendication 8 **caractérisée en ce que** ledit stator (15) comprend une multiplicité d'encoches (19) radiales disposées circonférentiellement le long dudit stator (15).

10. Machine électrique selon la revendication 9, **caractérisée en ce que** les encoches (19) s'étendent axialement le long du stator (15).

11. Machine électrique selon l'une des revendications 8 à 10, **caractérisée en ce que** le stator (15) a un diamètre extérieur compris entre 100 et 300 mm et est de préférence égal à 140 mm et un diamètre intérieur compris entre 50 et 200 mm et est de préférence égal à 95 mm.

12. Machine électrique selon l'une des revendications 8 à 11, **caractérisée en ce qu'**elle comprend un entrefer (18) dont la longueur est comprise entre 0.4 mm et 0.8 mm et est de préférence égale à 0.5 mm.

13. Machine électrique selon l'une des revendications 8 à 12, pour laquelle ladite machine électrique est du type machine électrique synchro-réluctante.

**Patentansprüche**

1. Rotor (1) für eine elektrische Maschine, wobei der Rotor (1) enthält:

    - einen von einem Blechpaket (3) geformten Rotorkörper, vorzugsweise auf einer Rotorwelle (2) angeordnet, und
    - N Magnetpolpaare, wobei jeder Magnetpol aus mindestens drei Magneten (7) besteht, die in axialen Aussparungen (6) positioniert sind, und
    - drei asymmetrische Flussbarrieren, die jeden Magnetpol bilden, davon eine äußere Flussbarriere (9), eine zentrale Flussbarriere (10) und eine innere Flussbarriere (11), wobei jede Flussbarriere (9, 10, 11) zwei geneigte Aussparungen (8) enthält, die zu beiden Seiten jeder axialen Aussparung (6) positioniert sind, wobei die zwei geneigten Aussparungen (8) zwischen sich einen Öffnungswinkel ($\theta$1, $\theta$2, $\theta$3) bilden, der dem Winkel zwischen zwei Geraden ($\Delta$1, $\Delta$2) entspricht, die jede durch die Mitte C des Rotors (1) und durch einen Mittenpunkt (M) gehen, der im Bereich einer Außenseite (12) der jeweiligen Aussparungen (8) jeder Flussbarriere (9, 10, 11) positioniert ist, wobei P die Nutenteilung des Rotors (1) definiert in Grad durch $P = \frac{360}{2xN}$ ist, **dadurch gekennzeichnet, dass** der Rotor (1) enthält

    - N primäre Magnetpole (13) die je von einer inneren Flussbarriere (11), die einen Öffnungswinkel ($\theta$1) enthält, einer zentralen Flussbarriere (10), die einen Öffnungswinkel ($\theta$2) enthält, und einer äußeren Flussbarriere (9) gebildet werden, die einen Öffnungswinkel ($\theta$3) enthält, so dass die Öffnungswinkel ($\theta$1, $\theta$2, $\theta$3) mindestens zwei der drei folgenden Gleichungen erfüllen: $\theta$1=(0.905+/-0.027)$\times$P, $\theta$2=(0.683+/-0.027)$\times$P, $\theta$3=(0.416+/-0.027)$\times$P,
    - N sekundäre Magnetpole (14), die je von einer inneren Flussbarriere (11), die einen Öffnungswinkel ($\theta$1) enthält, einer zentralen Flussbarriere (10), die einen Öffnungswinkel ($\theta$2) enthält, und einer äußeren Flussbarriere (9) gebildet werden, die einen Öffnungswinkel ($\theta$3) enthält, so dass die Öffnungswinkel ($\theta$1, $\theta$2, $\theta$3) mindestens zwei der drei folgenden Gleichungen erfüllen: $\theta$1=(0.819+/-0.027)$\times$P, $\theta$2=(0.601+/-0.027)$\times$P, $\theta$3=(0.373+/- 0.027)$\times$P, wobei jeder sekundäre Pol (14) mit einem primären Pol (13) abwechselt.

2. Rotor (1) nach Anspruch 1, wobei die Anzahl N von Magnetpolpaaren zwischen 2 und 9 liegt, vorzugsweise zwischen 3 und 6, und vorzugsweise 4 beträgt.

3. Rotor (1) nach einem der vorhergehenden Ansprüche, wobei die Flussbarrieren im Wesentlichen die Form eines V mit abgeflachtem Boden haben.

4. Rotor (1) nach einem der vorhergehenden Ansprüche, wobei die Öffnungswinkel ($\theta$1, $\theta$2, $\theta$3) der primären Magnetpole (13) mindestens zwei der drei folgenden Gleichungen erfüllen: $\theta$1=(0.905+/-0.02)xP, $\theta$2=(0.683+/-0.02)xP, $\theta$3=(0.416+/- 0.02)xP.

**5.** Rotor (1) nach einem der vorhergehenden Ansprüche, wobei die Öffnungswinkel (θ1, θ2, θ3) der sekundären Magnetpole (14) mindestens zwei der drei folgenden Gleichungen erfüllen: θ1=(0.819+/-0.02)xP, θ2=(0.601+/-0.02)xP, θ3=(0.373+/- 0.02)P.

**6.** Rotor (1) nach Anspruch 4, wobei die Öffnungswinkel (θ1, θ2, θ3) der primären Magnetpole (13) die drei Gleichungen erfüllen.

**7.** Rotor (1) nach Anspruch 5, wobei die Öffnungswinkel (θ1, θ2, θ3) der sekundären Magnetpole (14) die drei Gleichungen erfüllen.

**8.** Elektrische Maschine, **dadurch gekennzeichnet, dass** sie einen Stator (15) und einen Rotor (1) nach einem der vorhergehenden Ansprüche enthält, wobei der Rotor (1) innerhalb des Stators (15) untergebracht ist.

**9.** Elektrische Maschine nach Anspruch 8, **dadurch gekennzeichnet, dass** der Stator (15) eine Vielzahl von radialen Nuten (19) enthält, die am Umfang entlang des Stators (15) angeordnet sind.

**10.** Elektrische Maschine nach Anspruch 9, **dadurch gekennzeichnet, dass** die Nuten (19) sich axial entlang des Stators (15) erstrecken.

**11.** Elektrische Maschine nach einem der Ansprüche 8 bis 10, **dadurch gekennzeichnet, dass** der Stator (15) einen Außendurchmesser zwischen 100 und 300 mm hat und vorzugsweise gleich 140 mm ist, und einen Innendurchmesser zwischen 50 und 200 mm hat und vorzugsweise gleich 95 mm ist.

**12.** Elektrische Maschine nach einem der Ansprüche 8 bis 11, **dadurch gekennzeichnet, dass** sie einen Luftspalt (18) enthält, dessen Länge zwischen 0.4 mm und 0.8 mm liegt und vorzugsweise gleich 0.5 mm ist.

**13.** Elektrische Maschine nach einem der Ansprüche 8 bis 12, bei der die elektrische Maschine vom Typ elektrische Synchron-Reluktanzmaschine ist.

**Claims**

**1.** Rotor (1) for an electric machine, the rotor (1) comprising:

- a rotor body, formed by a stack of laminations (3), which is preferably placed on a rotor shaft (2), and
- N pairs of magnetic poles, each magnetic pole being made up of at least three magnets (7) positioned in axial recesses (6), and
- three asymmetric flux barriers which make up each magnetic pole, and which are an external flux barrier (9), a central flux barrier (10) and an internal flux barrier (11), each flux barrier (9, 10, 11) comprising two inclined recesses (8) positioned one on each side of each axial recess (6), the two inclined recesses (8) making between them a divergence angle (θ1, θ2, θ3) which corresponds to the angle between two straight lines (Δ1, Δ2) each passing through the centre C of the rotor (1) and through a midpoint (M) positioned on an external face (12) of the respective recesses (8) of each flux barrier (9, 10, 11), P being the pole pitch of said rotor (1), defined in degrees as $P = \frac{360}{2 \times N}$ ;

**characterized in that** said rotor (1) comprises:

- N primary magnetic poles (13) each made up of an internal flux barrier (11) having a divergence angle (θ1), of a central flux barrier (10) having a divergence angle (θ2), and an external flux barrier (9) having a divergence angle (θ3), such that the divergence angles (θ1, θ2, θ3) satisfy at least two of the following three equations: θ1 = (0.905 ± 0.027) × P, θ2 = (0.683 ± 0.027) × P, θ3 = (0.416 ± 0.027) × P,
- N secondary magnetic poles (14) each made up of an internal flux barrier (11) having a divergence angle (θ1), of a central flux barrier (10) having a divergence angle (θ2), and an external flux barrier (9) having a divergence angle (θ3), such that the divergence angles (θ1, θ2, θ3) satisfy at least two of the following three equations: θ1 = (0.819 ± 0.027) × P, θ2 = (0.601 ± 0.027) × P, θ3 = (0.373 ± 0.027) × P, each secondary pole (14) alternating with a primary pole (13).

2. Rotor (1) according to Claim 1, wherein said number N of pairs of magnetic poles is comprised between 2 and 9, preferably between 3 and 6, and is more preferably equal to 4.

3. Rotor (1) according to one of the preceding claims, wherein said flux barriers are substantially in the shape of a V with a flattened bottom.

4. Rotor (1) according to one of the preceding claims, wherein said divergence angles ($\theta1$, $\theta2$, $\theta3$) of said primary magnetic poles (13) satisfy at least two of the following three equations: $\theta1 = (0.905 \pm 0.02) \times P$, $\theta2 = (0.683 \pm 0.02) \times P$, $\theta3 = (0.416 \pm 0.02) \times P$.

5. Rotor (1) according to one of the preceding claims, wherein said divergence angles ($\theta1$, $\theta2$, $\theta3$) of said secondary magnetic poles (14) satisfy at least two of the following three equations: $\theta1 = (0.819 \pm 0.02) \times P$, $\theta2 = (0.601 \pm 0.02) \times P$, $\theta3 = (0.373 \pm 0.02) \times P$.

6. Rotor (1) according to Claim 4, wherein said divergence angles ($\theta1$, $\theta2$, $\theta3$) of said primary magnetic poles (13) satisfy all three equations.

7. Rotor (1) according to Claim 5, wherein said divergence angles ($\theta1$, $\theta2$, $\theta3$) of said secondary magnetic poles (14) satisfy all three equations.

8. Electrical machine, **characterized in that** it comprises a stator (15) and a rotor (1) according to one of the preceding claims, said rotor (1) being housed inside said stator (15).

9. Electrical machine according to Claim 8, **characterized in that** said stator (15) comprises a multitude of radial slots (19) arranged circumferentially along said stator (15).

10. Electrical machine according to Claim 9, **characterized in that** the slots (19) extend axially along the stator (15).

11. Electrical machine according to one of Claims 8 to 10, **characterized in that** the stator (15) has an outside diameter comprised between 100 and 300 mm and preferably equal to 140 mm, and an inside diameter comprised between 50 and 200 mm and preferably equal to 95 mm.

12. Electrical machine according to one of Claims 8 to 11, **characterized in that** it comprises an air gap (18) the length of which is comprised between 0.4 mm and 0.8 mm and preferably equal to 0.5 mm.

13. Electrical machine according to one of Claims 8 to 12, for which said electrical machine is of the synchronous-reluctance motor type.

**Figure 1**

**Figure 2**

**Figure 3**

Figure 4

Figure 5

## RÉFÉRENCES CITÉES DANS LA DESCRIPTION

**Documents brevets cités dans la description**

- WO 2016188764 A
- WO 2016198468 A
- EP 3273572 A
- US 2017201136 A
- CN 105914925
- FR 1758621